# EUROPEAN PATENT APPLICATION

(11) **EP 4 174 977 A1**
(43) Date of publication of application: **03.05.2023**
(21) Application number: 22807656.8
(22) Date of filing: 25.04.2022
(51) Int. Cl.: H01M 4/04, B05C 9/12, B05C 9/14, B05C 5/02, B05C 1/08, F26B 21/00, F26B 3/30

(54) **MANUFACTURING METHOD OF ELECTRODE FOR SECONDARY BATTERY INCLUDING PRESSING PROCESS OF WET ELECTRODE ACTIVE MATERIAL SLURRY AND MANUFACTURING APPARATUS**

(30) Priority: 13.05.2021 KR 20210061936
(71) Applicant: LG Energy Solution, Ltd., Seoul 07335 (KR)
(72) Inventor: LEE, Jegon, Daejeon 34122 (KR); PARK, Sung Chul, Daejeon 34122 (KR); KIM, Miseon, Daejeon 34122 (KR); LIM, Hanmin, Daejeon 34122 (KR)
(74) Representative: Plasseraud IP
(86) International application number: PCT/KR2022/005877
(87) International publication number: WO 2022/240008

(57) **Abstract**

The present disclosure provides a method for manufacturing an electrode for secondary battery, the method comprising: a pressing process in which a load is applied to an electrode active material slurry when the solid content of a wet electrode active material slurry is 70 wt% to 98 wt% 9 during the process of drying the electrode active material slurry coated with one or more layers on a current collector, and an apparatus for manufacturing the same.

## Description

### [TECHNICAL FIELD]

### Cross Citation with Related Application(s)

This application claims the benefit of Korean Patent Application No. 10-2021-0061936 filed on May 13, 2021 with the Korean Intellectual Property Office, the content of which is incorporated herein by reference in its entirety.

The present disclosure relates to a manufacturing method of electrode for secondary battery including pressing process of wet electrode active material slurry, and a manufacturing apparatus.

### [BACKGROUND]

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

In recent years, as mobile devices, such as portable computers, portable phones, and cameras, have been increasingly developed, the demand for secondary batteries has also sharply increased as an energy source for the mobile devices. Among such secondary batteries is a lithium secondary battery exhibiting high charge/discharge characteristics and lifetime characteristics and being environmentally friendly, in which much research has been carried out and which is now commercialized and widely used.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, research on the use of a lithium secondary battery having high energy density and discharge voltage is actively being conducted, a part of which are in the commercialization stage.

The electrode, which is a component of a lithium secondary battery, is manufactured by coating and drying on a current collector an electrode active material slurry in which an active material is mixed with a solvent together with a conductive material, a binder, and a thickener.

At this time, the solvent is removed during the drying process, and an electrode mixture is formed from the active material and the other components, but the structural characteristics of the electrode mixture are determined only by the composition of the slurry or the target loading amount.

On the other hand, the electrode that has completed up to the drying process is not suitable for constructing a secondary battery requiring high energy density because the thickness is too thick, and thus, goes through a pressing process of densifying the electrode to the target thickness.

Generally, such a pressing process is carried out so that the pressing ratio, indicating the thickness change before and after pressing, is a level of 20 to 40% and a load of 10 tons is applied to the electrode in order to exhibit such a pressing rate. However, as the load applied to the electrode is higher, various defect issues such as cracking of the active material, breakage of the electrode, and swell phenomenon occur.

Therefore, there is an urgent need to develop a secondary battery electrode manufacturing technology that can solve the above problems and reduce the probability of occurrence of defective issues during the pressing process, thereby improving the processability.

### [DETAILED DESCRIPTION OF THE INVENTION]

### [Technical Problem]

The present disclosure has been designed to solve the above-mentioned problems, and an object of the present disclosure is to manufacture an electrode with a higher density than a structure naturally formed by the drying process, which thus minimize the pressing load for pressing the electrode to a target thickness in the pressing process and minimize the probability of occurrence of defective issues.

### [Technical Solution]

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

According to one embodiment of the present disclosure, there is provided a method for manufacturing an electrode for secondary battery, the method comprising:
a pressing process in which a load is applied to an electrode active material slurry when the solid content of a wet electrode active material slurry is 70 wt% to 98 wt% during the process of drying the electrode active material slurry coated with one or more layers on a current collector.

At this time, the pressing process may be performed when the solid content of the wet electrode active material slurry is 80wt% to 90wt%.

The pressing process may be performed by a press roll that applies a linear pressure to the wet electrode active material slurry.

Specifically, the pressing process may be performed with a load of a linear pressure of 0.5 kgf/cm to 0.1 ton/cm.

Further, the method of manufacturing an electrode for secondary battery may further perform drying after the pressing process until the solid content of the electrode active material slurry reaches 99 to 100 wt%.

More specifically, the method for manufacturing an electrode for secondary battery may further include:
(a) a coating step of coating the electrode active material slurry with one or more layers onto a current collector;
(b) a drying step of drying the electrode active material slurry so as to have a solid content of 70 wt% to 98 wt%;
(c) a wet pressing step of applying a load to the electrode active material slurry having the solid content of 70 wt% to 98 wt%;
(d) a further drying step of further performing drying until the solid content of the electrode active material slurry becomes 99 to 100 wt% to form an electrode mixture; and
(e) a dry pressing step of pressing the electrode mixture that has been dried.

According to another embodiment of the present disclosure, there is provided an apparatus for manufacturing an electrode for secondary battery, the apparatus comprising:
a roller-shaped unwinder around which a sheet-shaped current collector is wound;
a transfer unit that continuously transfers the sheet-shaped current collector;
a coating unit that applies one or more layers of an electrode active material slurry to at least one surface of the sheet-shaped current collector;
a drying unit that dries the electrode active material slurry to form an electrode mixture on at least one surface of the sheet-shaped current collector; and
a roller-shaped rewinder that rewinds an electrode sheet in which an electrode mixture is formed on the sheet-shaped current collector,
wherein the drying unit includes a wet pressing unit that applies a load to the electrode active material slurry when the solid content of a wet electrode active material slurry is 70 wt% to 98 wt%.

At this time, the coating unit may be a coating die, a coating roll, or a slide-slot.

Meanwhile, the drying unit includes a hot air nozzle for generating hot air in the drying oven, an IR lamp, or both, and the wet pressing unit may be a press roll which is formed in a section in which the solid content of the electrode active material slurry is 70wt% to 98wt% inside or outside the drying oven.

Here, the hot air nozzle and the IR lamp may be alternately arranged.

### [BRIEF DESCRIPTION OF THE DRAWINGS]

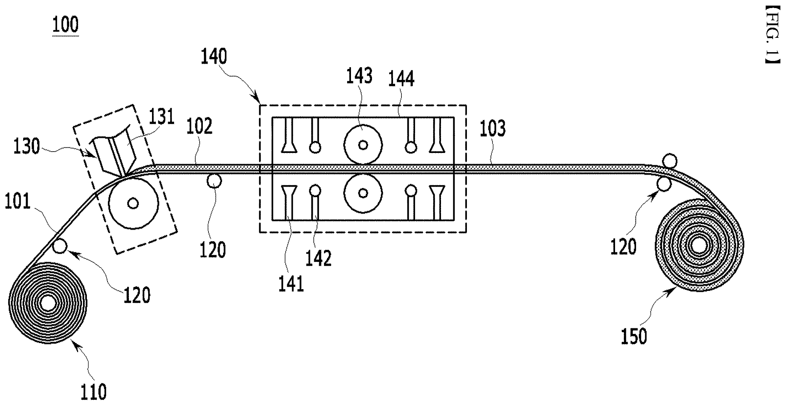

Fig. 1 is a schematic diagram of an apparatus for manufacturing an electrode for secondary battery according to an embodiment of the present disclosure.

### [DETAILED DESCRIPTION OF THE EMBODIMENTS]

Now, the present disclosure will be described in more detail.

According to an embodiment of the present disclosure, there is provided a method for manufacturing an electrode for secondary battery, the method comprising:
a pressing process in which a load is applied to an electrode active material slurry when the solid content of a wet electrode active material slurry is 70 wt% to 98 wt% during the process of drying the electrode active material slurry coated with one or more layers on a current collector.

According to another embodiment of the present disclosure, there is provided an apparatus for manufacturing an electrode for secondary battery, the apparatus comprising:
a roller-shaped unwinder around which a sheet-shaped current collector is wound;
a transfer unit that continuously transfers the sheet-shaped current collector;
a coating unit that applies one or more layers of an electrode active material slurry to at least one surface of the sheet-shaped current collector;
a drying unit that dries the electrode active material slurry to form an electrode mixture on at least one surface of the sheet-shaped current collector; and
a roller-shaped rewinder that rewinds an electrode sheet in which an electrode mixture is formed on the sheet-shaped current collector,
wherein the drying unit includes a wet pressing unit that applies a load to the electrode active material slurry when the solid content of a wet electrode active material slurry is 70 wt% to 98 wt%.

Hereinafter, the apparatus for manufacturing an electrode for secondary battery of the present disclosure and the method for manufacturing an electrode for secondary battery based thereon will be described in detail with reference to the accompanying figures, so that those skilled in the art can easily implement the invention. However, the following figures are for illustrative purposes only, and the invention may be modified in various different ways within the scope of the present disclosure, and is not limited to the figures.

Specifically, Fig. 1 schematically shows an apparatus for manufacturing an electrode for secondary battery according to an embodiment of the present disclosure. The apparatus for manufacturing an electrode for secondary battery according to an embodiment of the present disclosure includes: a roller-shaped unwinder 110 around which a sheet-shaped current collector 101 is wound, a transfer unit 120 that continuously transfers the sheet-shaped current collector 101, a coating unit 130 that applies one or more layers of an electrode active material slurry 102 to at least one surface of the sheet-shaped current collector 101, a drying unit 140 that dries the electrode active material slurry 102 to form an electrode mixture 103 on at least one surface of the sheet-shaped current collector 101, and a roller-shaped rewinder 150 that rewinds an electrode sheet in which an electrode mixture 103 is formed on the sheet-shaped current collector 101.

At this time, the drying unit 140 includes a wet pressing unit 143 that applies a load to the electrode active material slurry 102 when the solid content of the wet electrode active material slurry 102 is 70 wt% to 98 wt%.

In the following, while describing the components of the electrode manufacturing apparatus in detail, the manufacturing method of the electrode for secondary battery according to the present disclosure will also be described.

First, the unwinder 110 is composed of a structure in which the sheet-shaped current collector 101 is wound around a roll.

The unwinder 110 unwinds the sheet-shaped current collector 101 to transfer the sheet-shaped current collector 101 by a transfer unit 120.

The transfer unit 120 performs the role of receiving the sheet-shaped current collector 101 unwound from the unwinder 110, and transferring the sheet-shaped current collector 101 to the rewinder 150 via the coating unit 130 and the drying unit 140.

Here, the transfer unit 120 may be a roll.

Next, the sheet-shaped current collector 101 unwound from the unwinder 110 and transferred by the transfer unit 120 is transferred to the coating unit 130 by the transfer unit 120.

The coating unit 130 coats the electrode active material slurry 102 with one or more layers onto the sheet-shaped current collector 101.

At this time, the coating unit 130 is not limited as long as it is a form that can coat the electrode active material slurry 101, and it can be coated by a conventionally known coating apparatus such as a coating die, a coating roll, or a slide-slot, and may be determined according to the number of layers of the electrode active material slurry 102. The specific configuration differs depending on whether it is a double-sided coating or a single-sided coating. However, since the coating form is disclosed in various ways in the art, only a structure in which the electrode active material slurry is coated via a coating die is illustrated as an example in Fig. 1.

Specifically, the coating unit 130 may be composed of a structure comprising: a coating die 131 provided with an outflow slot so that the electrode active material slurry 102 flows out toward the sheet-shaped current collector 101, and a coater roll 132 that is spaced apart from the outflow slot of the coating die 131 at predetermined intervals and transfers the sheet-shaped current collector 101 by rotation so that the electrode active material slurry 102 can be coated onto the sheet-shaped current collector 101 by the coating die 131.

Subsequently, the sheet-shaped current collector 101 coated with the electrode active material slurry 102 is transferred to the drying unit 140 by the transfer unit 120.

The drying unit 140 according to the present embodiment is not limited as long as it is an apparatus capable of forming the electrode mixture 103 by evaporating the solvent from the electrode active material slurry 102, and may have any conventionally known structure, for example, it can be carried out by heating and/or hot air.

Therefore, the drying unit 140 includes a hot air nozzle 141 for generating hot air in the drying oven 144, and an IR lamp 142. Meanwhile, in Fig. 1, simultaneously with that, the apparatus 100 for manufacturing an electrode for secondary battery according to the present disclosure includes a wet pressing unit 143 as a press roll in the drying oven 144.

Meanwhile, Fig. 1 shows a configuration in which the wet pressing unit 143 is formed in the drying oven 144, but is not limited thereto. Although the wet pressing unit 143 is included in the drying unit 140, it is not formed in the drying oven 144, and the drying oven 144 is formed of two or more units. A form including a hot air nozzle 141 and an IR lamp 142 in each unit is possible, and also a form in which a wet pressing unit 143 is formed between units having a solid content of 70 wt% to 98 wt% among the units is possible.

The drying process of the electrode active material slurry 102 within the drying unit 140 is performed by the following procedure.

First, when the electrode active material slurry 102 starts to be dried in the drying unit 140, the electrode active material slurry 102 is dried so that the solid content is 70 wt% to 98 wt%. Subsequently, wet pressing is performed in which a load is applied to the electrode active material slurry 102 having a solid content of 70 wt% to 98 wt%, and then additional drying is performed until the solid content of the electrode active material slurry 102 reaches 99 to 100 wt% to form the electrode mixture 103.

For this purpose, the wet pressing unit 143 may be formed in a section in which the solid content of the electrode active material slurry 102 is 70wt% to 98wt% inside or outside the drying oven 144. More specifically, the wet pressing unit 143 according to the present embodiment may be formed in a section in which the solid content of the wet electrode active material slurry 102 is 80 wt% to 90 wt%.

The content of solids can be expressed by the solid content by measuring by the weight change of the slurry before and after drying, or by measuring the water content in the electrode by in-line measurement using an NIR water content measurement sensor or the like.

At this time, the wet pressing process is performed by a press roll that applies a linear pressure to the wet electrode active material slurry.

Specifically, the wet pressing process may be carried out with a load of linear pressure of 0.5 kgf/cm or more, specifically 0.8 kgf/cm or more, 5 ton/cm or less, specifically 1 ton/ cm or less, more specifically 0.1 ton/cm or less.

If the pressing is performed with too small linear pressure outside the above range, the advantage of performing wet pressing cannot be obtained, and the effect of the present disclosure cannot be exerted. If the pressing is performed with too large linear pressure, cracking of the active material may occur even during wet pressing, which is not preferable.

Meanwhile, as another configuration included within the drying unit 140, the configuration of the hot air nozzle 141 and the IR lamp 142 for performing drying is not limited, and only one configuration can be included, and both configurations can be included. It may be configured such that based on the wet pressing unit 143, the hot air nozzle 141 is included on one side and the IR lamp 142 is included on the other side. The hot air nozzle 141 and the IR lamp 142 can be alternately arranged so that the hot air type and the heating type can be dried together.

When passing through such a drying unit 140, the solvent is almost completely evaporated on the sheet-shaped current collector 101 to form an electrode mixture 103 having a solid content of 99 to 100 wt%, and the electrode sheet in which the electrode mixture 103 is formed on the sheet-shaped current collector is then wound around a roller-shaped rewinder 150.

The rewinder 150 is composed of a structure in which the electrode sheet is wound on a roll similarly to the unwinder 110.

Although not shown in the figure, subsequently, the electrode sheet is unwound again for pressing, and a step of being rolled through a dry pressing unit so as to have the proper porosity and electrode density can be performed.

As long as the dry pressing unit is also capable of pressing the electrode mixture, the apparatus, structure, and the like are not limited, but, for example, it may be a form of pressing by adjusting the separation interval of the pair of rollers.

At this time, according to the present disclosure, one wet pressing is performed in an wet state in which the electrode active material slurry is not completely dried, and then, the pressing ratio is relatively low in the dry pressing process performed after drying is completed.

More specifically, in the case where wet pressing is not performed, it is generally not possible to set the pressing ratio high in the dry pressing step. However, when wet pressing is performed according to the present disclosure, drying is completed in a state in which the thickness of the electrode mixture is already reduced, so that pressing can be performed with a lower load, and a desired thickness, porosity, etc. of the electrode mixture can be obtained although a pressing rate is not high.

Here, the pressing ratio means a ratio of the difference in the thickness of the electrode mixture before and after pressing to the thickness of the electrode mixture before pressing. Therefore, it means that the smaller the pressing ratio, the smaller the difference in thickness before and after dry pressing.

Various electrode materials contained in the electrode active material slurry, for example, an active material, a conductive material, a binder, a filler and the like are known in the art, and all of these are included in the scope of the present disclosure, and the present disclosure is not limited to the composition of the electrode active material slurry.

Meanwhile, the sheet-shaped current collector on which the electrode active material slurry is coated is not particularly limited as long as it has conductivity while not causing chemical changes to the battery, and for example, copper, stainless steel, aluminum, nickel, titanium, calcined carbon, or aluminum or stainless steel having a surface treated with carbon, nickel, titanium, silver, and the like can be used. In addition, the sheet-shaped current collector may have a thickness of 3 to 500 *µ*m, and may have fine irregularities formed on the surface of the current collector to increase the adhesion of the positive electrode active material. For example, it may be used in various forms such as films, sheets, foils, nets, porous bodies, foams, and nonwoven fabrics.

Hereinafter, the present disclosure will be described in detail by way of examples so that those of ordinary skill in the art can easily carry out the invention. However, the present disclosure can be embodied in several different forms and is not limited to the examples described herein.

### <Example 1>

Artificial graphite as an active material, SBR as a binder, carbon black as a conductive material, and CMC as an additive were used, and electrode active material: binder: conductive material: additive was added to water at a weight ratio of 96: 0.5: 2.5: 1 to obtain an electrode active material slurry having a solid content of 48wt%. The obtained slurry was completely dried, coated onto a current collector of Cu foil (thickness: 20 *µ*m) so that the loading amount was 266 mg/25cm², and then dried at 100°C. The electrode active material slurry was taken out from a drying furnace at the moment when the solid content reached 90wt%, and rolled at a linear pressure of 0.8kgf/cm through a roll press process, and again further dried at 100°C until the solid content reached about 100 wt% to manufacture an electrode.

The solid content was measured by the change in the weight of the slurry before and after drying.

### <Example 2>

An electrode was manufactured in the same manner as in Example 1, except that in Example 1, the solid content of the electrode active material slurry was 80 wt% at the time when the roll press process was performed.

### <Comparative Example 1>

An electrode was manufactured in the same manner as in Example 1, except that in Example 1, the solid content of the electrode active material slurry was 60 wt% at the time when the roll press process was performed.

### <Comparative Example 2>

An electrode was manufactured in the same manner as in Example 1, except that in Example 1, the roll press process was performed at a linear pressure of 0.2 kgf/cm.

### <Comparative Example 3>

An electrode was manufactured in the same manner as in Example 1, except that in Example 1, the roll press process was not performed.

### <Experimental Example 1>

The thickness of the electrode mixture of the electrodes prepared in Examples 1 to 4 and Comparative Examples 1 to 3 was measured through a thickness meter. Specifically, the thickness was measured using TESA-u-Hite Height Gauges as a thickness meter.

A value obtained by subtracting the thickness of the Cu foil as a current collector from the value measured by a thickness meter was taken as the thickness of the electrode mixture, and the results are shown in Table 1 below.

**[Table 1]**

| | Electrode thickness |
|---|---|
| Example 1 | 113 um |
| Example 2 | 114 um |
| Comparative Example 1 | Electrode layer is destroyed during pressing |
| Comparative Example 2 | 118 um (no pressing effect during drying) |
| Comparative Example 3 | 118 um (electrode thickness after normal drying process ) |

Referring to Table 1, it can be confirmed that when the wet pressing according to the present disclosure is performed, the thickness of the electrode dried before the dry pressing process is reduced by a predetermined amount, as compared with Comparative Example 3 where the wet pressing is not performed.

On the other hand, in a state in which drying is not made too much, that is, when the solid content is less than 70 wt% (Comparative Example 1), the electrode layer is destroyed during pressing, and when the linear pressure in wet pressing is too weak (Comparative Example 2), there is no pressing effect, which is not preferable.

### [Description of Reference Numerals]

100: electrode manufacturing apparatus,
101: sheet-shaped current collector,
102: electrode active material slurry,
110: unwinder,
120: transfer unit,
130: coating unit,
140: drying unit,
150: rewinder.

### [Industrial Applicability]

According to the present disclosure, when the solid content satisfies a specific condition before the electrode active material slurry is completely dried, when performing wet pressing in which a load is applied to the wet electrode active material slurry, and when drying is completed, it is possible to secure a structurally denser structure than when pressing is not performed. Then, after drying is completed, the target pressing rate decreases in the dry pressing process, whereby the pressing load for pressing the electrode to the target thickness can be reduced, which is effective in minimizing defect issues such as cracking, fracture, and swelling phenomenon of the active material.

## Claims

1. A method for manufacturing an electrode for secondary battery, the method comprising:
a pressing process in which a load is applied to an electrode active material slurry when the solid content of a wet electrode active material slurry is 70 wt% to 98 wt% 9 during the process of drying the electrode active material slurry coated with one or more layers on a current collector.

2. The method for manufacturing an electrode for secondary battery according to claim 1, wherein:
the pressing process is performed when the solid content of the wet electrode active material slurry is 80wt% to 90wt%.

3. The method for manufacturing an electrode for secondary battery according to claim 1, wherein:
the pressing process is performed by a press roll that applies a linear pressure to the wet electrode active material slurry.

4. The method for manufacturing an electrode for secondary battery according to claim 3, wherein:
the pressing process is performed with a load of a linear pressure of 0.5 kgf/cm to 0.1 ton/cm.

5. The method for manufacturing an electrode for secondary battery according to claim 1, wherein:
the method further performs drying after the pressing process until the solid content of the electrode active material slurry reaches 99 to 100 wt%.

6. The method for manufacturing an electrode for secondary battery according to claim 1, wherein the method comprises:
(a) coating the electrode active material slurry with one or more layers onto a current collector;
(b) drying the electrode active material slurry so as to have a solid content of 70 wt% to 98 wt%;
(c) wet pressing by applying a load to the electrode active material slurry having the solid content of 70 wt% to 98 wt%;
(d) further performing drying until the solid content of the electrode active material slurry becomes 99 to 100 wt% to form an electrode mixture; and
(e) dry pressing the electrode mixture that has been dried.

7. An apparatus for manufacturing an electrode for secondary battery, the apparatus comprising:
a roller-shaped unwinder around which a sheet-shaped current collector is wound;
a transfer unit that continuously transfers the sheet-shaped current collector;
a coating unit that applies one or more layers of an electrode active material slurry to at least one surface of the sheet-shaped current collector;
a drying unit that dries the electrode active material slurry to form an electrode mixture on at least one surface of the sheet-shaped current collector; and
a roller-shaped rewinder that rewinds an electrode sheet in which an electrode mixture is formed on the sheet-shaped current collector,
wherein the drying unit includes a wet pressing unit that applies a load to the electrode active material slurry when the solid content of a wet electrode active material slurry is 70 wt% to 98 wt%.

8. The apparatus for manufacturing an electrode for secondary battery according to claim 7, wherein:
the coating unit is a coating die, a coating roll, or a slide-slot.

9. The apparatus for manufacturing an electrode for secondary battery according to claim 7, wherein:
the drying unit includes a hot air nozzle for generating hot air in the drying oven, an IR lamp, or both, and the wet pressing unit is a press roll which is formed in a section in which the solid content of the electrode active material slurry is 70wt% to 98wt% inside or outside the drying oven.

10. The apparatus for manufacturing an electrode for secondary battery according to claim 7, wherein:
the hot air nozzle and the IR lamp are alternately arranged.
